Europäisches Patentamt

**European Patent Office**

Office européen des brevets

(19)

(11) Numéro de publication : **0 143 009**
**B1**

(12) # FASCICULE DE BREVET EUROPÉEN

(45) Date de publication du fascicule du brevet :
25.03.87

(21) Numéro de dépôt : **84401651.9**

(22) Date de dépôt : **08.08.84**

(51) Int. Cl.⁴ : **E 01 D 15/14**, B 60 F 3/00

(54) **Véhicule amphibie pouvant servir de bac autonome et pouvant former un pont flottant.**

(30) Priorité : 19.09.83 FR 8314859

(43) Date de publication de la demande :
29.05.85 Bulletin 85/22

(45) Mention de la délivrance du brevet :
25.03.87 Bulletin 87/13

(84) Etats contractants désignés :
AT BE CH DE FR GB IT LI LU NL SE

(56) Documents cités :
FR-A- 1 592 501
FR-A- 1 603 771
FR-A- 2 013 032
FR-A- 2 271 117
FR-A- 2 358 314
FR-A- 2 500 504
US-A- 4 328 601

(73) Titulaire : CHAUDRONNERIE ET FORGES D'ALSACE -
C.E.F.A.
rue de la Gare
F-67250 Soultz sous Forets (FR)

(72) Inventeur : Gillois, Jean
58, rue du Général Galliéni
F-78220 Viroflay (FR)

(74) Mandataire : Maureau, Bernard et al
Cabinet Germain, Maureau et Millet Conseils en
Brevets d'Invention 64, rue d'Amsterdam
F-75009 Paris (FR)

Jouve, 18, rue St-Denis, 75001 Paris, France

## Description

La présente invention a pour objet un véhicule amphibie, et plus spécialement un véhicule pouvant servir de bac autonome pour le franchissement de plans d'eau ou qui, assemblé à d'autres véhicules du même type est susceptible de former un pont flottant. Ce véhicule est plus spécialement, quoique non exclusivement, destiné à permettre le franchissement de plans d'eau ou de cours d'eau à des véhicules militaires et à des troupes dans le cas de conflits armés.

Le dernier grand conflit à s'être déroulé de part et d'autre d'une grande voie d'eau, a mis en évidence :

la lenteur de la construction et les longs délais nécessaires à la mise en œuvre des ponts flottants classiques, même par des personnes très entraînées et fortement motivées en ambiance de combat, et

la très grande fragilité et la vulnérabilité de ces ponts flottants qui, détectés, surveillés et parfaitement repérés par satellite, furent systématiquement la cible des armes à longue portée au moment le plus opportun pour causer le maximum de dommages matériels et de pertes humaines.

Il résulte de ces constatations qu'il est très intéressant de disposer, pour le franchissement d'une voie d'eau, d'une pluralité de dispositifs amphibies, à grand débit opérationnel, qui sont incomparablement moins vulnérables que les ponts flottants du fait de leur mobilité.

Il existe actuellement un type de véhicule connu par le brevet français 1 592 501 comportant une coque, équipée de roues escamotables et motorisées, en vue de son déplacement terrestre, cette coque formant un flotteur pour le franchissement de plans d'eau, et étant équipée sur ses parois frontales de deux séries de rampes articulées qui, en position dépliée, prolongent la face supérieure de la coque et délimitent avec celle-ci le plan de chargement. Les parois longitudinales de la coque sont équipées de flotteurs auxiliaires gonflables augmentant la flottabilité du véhicule lorsque celui-ci est utilisé comme un bac. Dans ces véhicules, les flotteurs auxiliaires gonflables ont une longueur inférieure à celle de la coque de sorte qu'il subsiste entre chaque extrémité de chacun d'eux et celle adjacente d'un éventuel flotteur voisin porté par l'une des rampes du véhicule considéré, un intervalle dans lequel l'eau peut s'engouffrer et qui, de ce fait, nuit à la stabilité du véhicule.

Par ailleurs, ce type de véhicule comporte généralement, des moyens de propulsion aquatiques constitués par des hélices orientables et montées sur des supports télescopiques verticalement disposés au niveau de ses parois frontales. La présence de ces hélices nécessite, pour leur bon fonctionnement, l'aménagement de niches et de tunnels dans la coque, ainsi que l'aménagement d'espaces entre la coque et les flotteurs.

Il en résulte une réduction importante du volume de la coque limitant la flottabilité de celle-ci, augmentant le tirant d'eau, et se traduisant par des difficultés d'accès aux postes de pilotage, par des portes ouvrantes ménagées dans les parois latérales. En outre, les hélices présentent un caractère très vulnérable, augmentent le tirant d'eau de l'engin, et les formes qu'elles imposent à la carène de celui-ci, ne permettent qu'un passage dans l'eau très médiocre, compte tenu des solutions de continuité entre les différentes parties flottantes.

On connaît aussi, par le brevet français 2 500 504, un pont motorisé dont l'élément central est équipé de deux dispositifs de propulsion à jets d'eau qui, par rapport aux dispositifs à hélices, présentent l'avantage d'un encombrement considérablement réduit par rapport à celui des dispositifs à hélices, d'une moins grande vulnérabilité, et enfin d'une gêne bien inférieure dans le poste de conduite.

La présente invention vise à remédier à tous ces inconvénients. A cet effet, dans le véhicule qu'elle concerne et qui est du type comportant une coque équipée de roues escamotables et de flotteurs latéraux et longitudinaux gonflables, pour le franchissement de plans d'eau, sur les parois frontales de laquelle sont articulées deux séries de rampes elles-mêmes équipées de flotteurs latéraux et longitudinaux gonflables, qui, en position repliée, reposent sur la paroi supérieure de la coque et en position dépliée, prolongent celle-ci, d'une part chaque flotteur latéral associé à la coque possède, en position gonflée, une longueur correspondant à la longueur de la coque, tandis que des volets articulés, solidaires des flotteurs, et occupant une position horizontale prolongeant la paroi supérieure de la coque en position gonflée des flotteurs, possèdent chacun une longueur légèrement inférieure à celle de la coque, de façon à dégager les hublots d'extrémité ménagés dans les parois latérales, en position repliée des volets, les extrémités de chaque flotteur comportant un système élastique de rappel entre la coque et le volet correspondant, en position dégonflée et d'autre part, chaque tronçon de rampe, articulé à une extrémité de la coque, et possédant une largeur correspondant à la largeur de celle-ci, est équipé de deux flotteurs longitudinaux et latéraux gonflables, de longueur correspondant à celle du tronçon de rampe et de section correspondant à celle des flotteurs de coque, de manière à venir chacun en appui contre le flotteur latéral de coque situé du même côté, et escamotables en position dégonflée entre un volet et ce tronçon de rampe, chaque volet associé à un flotteur venant en position horizontale dans le prolongement de la paroi supérieure de la rampe, en position gonflée de ce flotteur.

Le fait que les flotteurs latéraux de rampes viennent au contact des flotteurs latéraux de la coque et possèdent une section identique à celle de ces derniers flotteurs se traduit, d'une part, par une amélioration de la flottabilité du véhicule, et, d'autre part, par une continuité des lignes d'eau de celui-ci.

Avantageusement, chaque flotteur latéral associé à une rampe possède une largeur sensiblement égale à celle des flotteurs latéraux associés à la coque, et chaque volet associé à un flotteur latéral de rampe possède une largeur sensiblement égale à celle d'un volet associé à un flotteur de coque, et est réalisé en deux parties articulées autour d'un axe longitudinal.

Cette dernière caractéristique est très intéressante car elle permet, malgré une hauteur relativement faible des éléments de rampes, de replier le long de ceux-ci des volets qui possèdent une largeur totale égale à celle des volets articulés sur la coque.

Avantageusement, chaque tronçon de rampe, articulé à une extrémité de la coque, est équipé d'un flotteur gonflable qui, occupant une position centrale et s'étendant entre les flotteurs longitudinaux, vient prendre appui contre la paroi frontale de la coque, et est maintenu en position par un volet, disposé sous la rampe et articulé sur celle-ci autour d'un axe parallèle à l'axe d'articulation de la rampe de la coque.

Ce volet transversal remplit les mêmes fonctions que les volets associés aux flotteurs longitudinaux permettant au compartiment central d'être en contact avec la coque sans subir de déformations verticales sous la poussée hydrostatique. En outre, ce volet articulé remplit une fonction de tirant de jonction entre les deux éléments de la rampe repliés par verrouillage hydraulique ou mécanique. De cette façon, la rampe remplit ses fonctions de travure homogène et indéformable, lors des mises en tension sous les charges roulantes, lorsque le véhicule forme un élément de pont.

Avantageusement, les différents flotteurs sont équipés de soupapes de sécurité tarées à une valeur déterminée et sont alimentés en air sous pression par des groupes de compresseurs-décompresseurs à débit continu.

Cet agencement est intéressant car il permet une alimentation permanente de tous les compartiments des flotteurs assurant une compensation des fuites permanentes par les soupapes de sécurité, ou accidentelles par déchirure par exemple. Cette injection permanente d'air assure une jonction souple et continue des différents flotteurs au cours des différents mouvements dont le véhicule est susceptible, tandis que la présence de soupapes de sécurité évite les surpressions nuisibles susceptibles de se produire lors de la manœuvre des rampes, par exemple en période d'accostage en site négatif.

En outre, les groupes de compresseurs sont agencés pour fonctionner comme décompresseurs par inversion de leur sens de rotation, et sont reliés aux différents compartiments des flotteurs gonflables par l'intermédiaire de soupapes à double effet associées à des moyens commandant leur ouverture dès que le groupe fonctionne en décompression. Un tel agencement assure un dégonflage très rapide des différents flotteurs.

Ces flotteurs sont rappelés en position de fermeture par des sangles élastiques, les volets qui leur sont associés étant pour leur part, commandés par des vérins hydrauliques, sauf les parties extérieures des volets de rampes qui se replient automatiquement lors du dégonflage des flotteurs associés.

Il est avantageusement prévu quatre groupes compresseurs-décompresseurs, un par flotteur latéral de coque et un dans chaque rampe.

Selon une autre caractéristique intéressante, chaque flotteur est compartimenté par des cloisons coniques dont les extrémités sont en appui les unes contre les autres. Cet agencement permet, en cas d'une éventuelle déchirure d'un compartiment, l'occupation pour partie de celui-ci par les extrémités des compartiments voisins, ce qui évite de diminuer sensiblement les caractéristiques de portance de l'engin.

L'adaptation au système de gonflage-dégonflage des flotteurs d'un sélecteur de pilotage permet d'assurer le gonflage ou le dégonflage de tout ou partie des compartiments en fonction de la configuration d'emploi ou d'assemblage de l'engin, qui peut se présenter sous les formes suivantes :

tous les compartiments de rampes sont allongés, en configuration bac, ou partie de rive de pont, et la totalité des flotteurs sont gonflés ;

en configuration d'assemblage, rampe repliée, seuls les flotteurs latéraux sont gonflés ;

en configuration d'assemblage à double voie, bac, portière, pont, seuls les flotteurs extérieurs sont gonflés.

L'installation d'un flotteur d'étrave sous le tronçon de rampe articulé sur la coque entraîne le déplacement du système d'ancrage qui, réimplanté à l'extrémité de chaque rampe, voit son champ d'utilisation étendu à l'ancrage du véhicule en configuration pont, par simple dépose de volets amovibles encastrés dans le tablier au droit de l'ancre. De ce fait, le mouillage de l'ancre est toujours instantané, son relevage normal n'exigeant que quelques minutes qui, en cas de détresse, peuvent être réduites à néant en laissant filer le câble.

Suivant une autre caractéristique de l'invention, les moyens assurant le déplacement du véhicule sur l'eau sont constitués par des propulseurs à jets d'eau sous pression disposés à proximité des deux parois frontales de la coque.

Avantageusement, chaque propulseur comporte un point d'aspiration verticalement de l'eau amenant celle-ci à un hélicoïde horizontal assurant la compression du fluide puis projetant le jet propulsif tangentiellement à l'hélicoïde sous un angle de l'ordre de 15° sous la coque.

L'équipement de l'engin en propulseurs horizontaux en lieu et place des propulseurs verticaux télescopiques à hélices, tels qu'utilisés actuellement, permet de modifier profondément les structures des extrémités de la coque en supprimant la totalité des tunnels d'amenée d'eau aux hélices et d'évacuation du flux pulsé, et d'adapter ces profils pour y inclure les propulseurs, de telle sorte que ceux-ci soient protégés lors des atterrissages et accostages en eau peu profonde, tout en respectant les angles d'approche et de sortie compatibles avec une circulation tout terrain de l'engin.

Il est ainsi possible d'augmenter la hauteur des panneaux frontaux d'extrémité de la coque et de ménager dans ceux-ci les portes d'accès aux postes de pilotage, facilitant l'entrée et la sortie de l'équipage, même lorsque l'engin est à flot, les rampes étant repliées sur la coque, rendant ainsi possible le sauvetage du chauffeur en cas de détresse de l'engin dans cette configuration de navigation. La suppression des tunnels nécessaires dans le cas d'hélices, permet d'abaisser le plancher des postes de pilotage au niveau des raidisseurs du fond de coque, ce qui améliore l'habitabilité et, par suite, le confort des équipages tout en permettant l'installation de nouveaux équipements de conduite.

Le déplacement des portes de cabines des parois latérales vers les parois frontales, et leur remplacement au niveau des parois latérales par de simples hublots fixes de faible largeur, suffisant pour assurer la visibilité latérale lors des évolutions terrestres, contribue à permettre d'allonger la longueur des flotteurs latéraux, jusqu'aux extrémités de la coque.

De toute façon, l'invention sera mieux comprise à l'aide de la description qui suit en référence au dessin schématique annexé représentant, à titre d'exemple non limitatif, une forme d'exécution de ce véhicule :

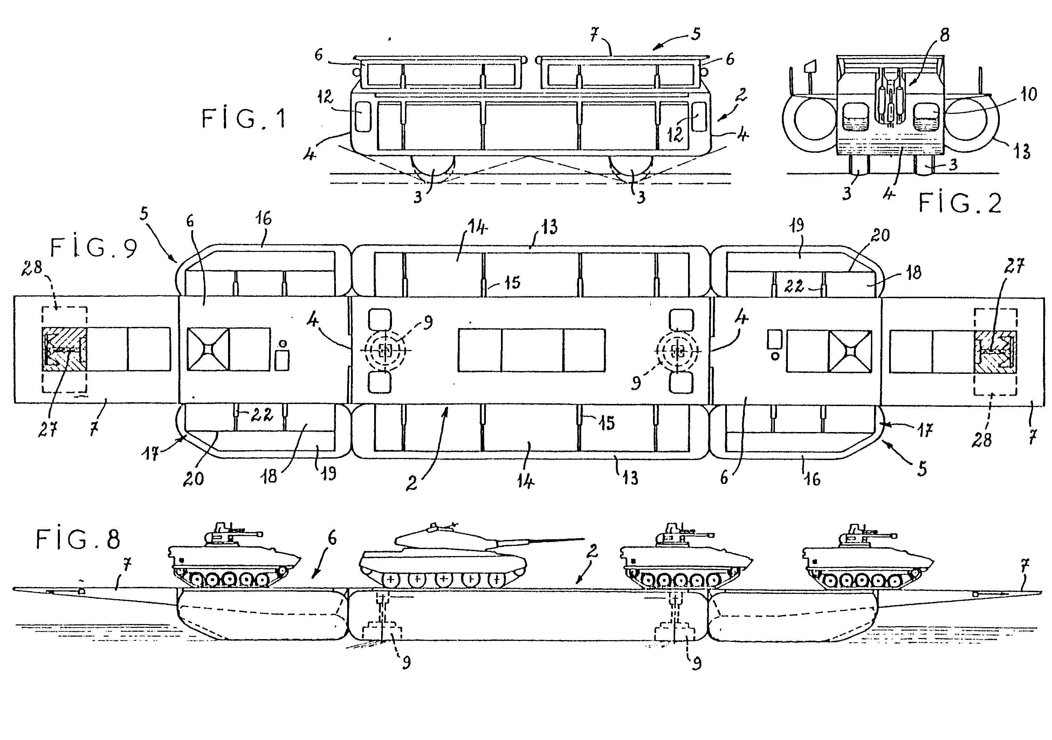

Figure 1  en est une vue de côté, en position de circulation terrestre ;

Figure 2  en est une vue en face, en position de navigation ;

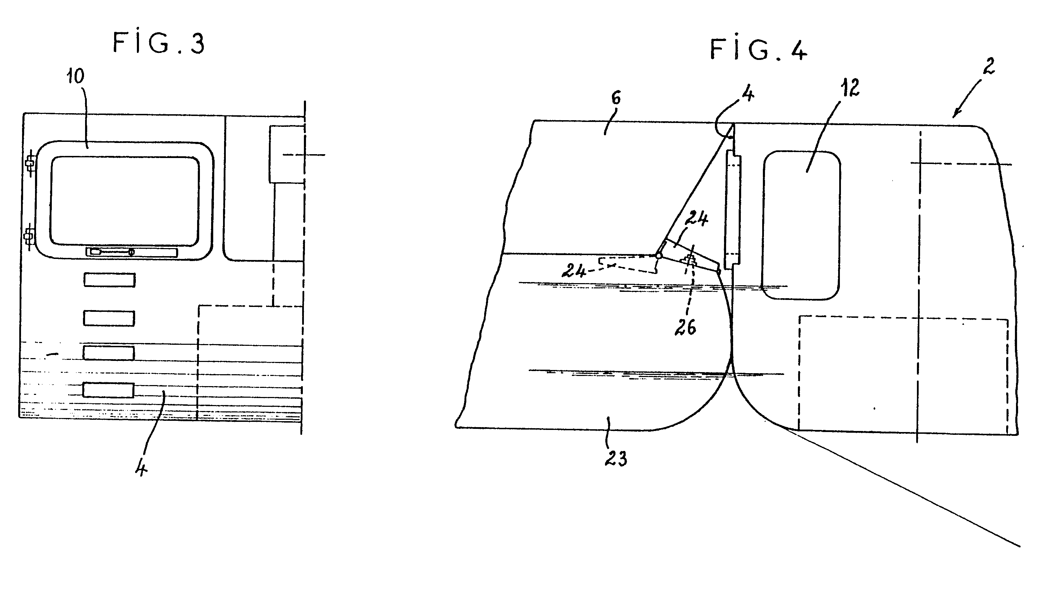

Figure 3  est une vue partielle et à échelle agrandie d'une paroi frontale du véhicule ;

Figure 4  est une vue partielle, en coupe longitudinale, d'une extrémité de la coque et de la rampe qui lui est associée, en période de navigation ;

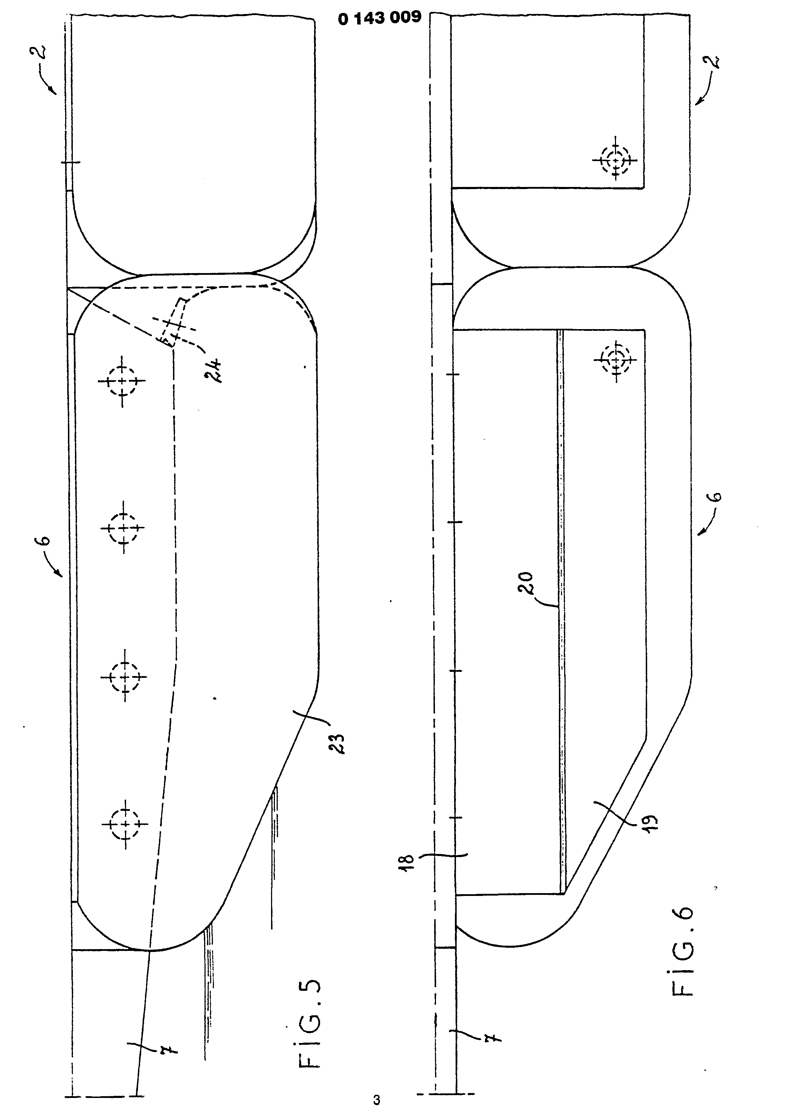

Figure 5  est une vue partielle de côté d'une extrémité de la coque et du tronçon de rampe qui lui est associé, en période de navigation ;

Figure 6  est une vue partielle de dessus d'un côté de la coque et d'une rampe qui lui est associée ;

Figure 7  représente deux demi-vues en coupe transversale de la coque, respectivement en position repliée des flotteurs dans la partie gauche et en position gonflée des flotteurs dans la partie droite ;

Figure 8  est une vue de côté de ce véhicule en période de navigation, les rampes étant déployées ;

Figure 9  en est une vue de dessus, les rampes étant déployées ;

Figures 10 et 11  sont deux vues respectivement de côté et de dessus de deux véhicules selon l'invention, assemblés l'un à l'autre pour former une partie d'un pont flottant.

Le véhicule représenté sur le dessin comprend une partie centrale constituée par une coque (2) de forme générale parallélépipédique. Cette coque est équipée de roues (3) motorisées et escamotables, permettant le déplacement sur terre du véhicule.

A proximité des deux panneaux frontaux (4) du véhicule et de la paroi supérieure de celui-ci, sont articulées deux rampes (5) dont chacune comporte une première partie (6) articulée directement sur la coque (2) et une seconde partie (7) articulée seulement sur le tronçon de rampe (6).

Les manœuvres de pliage et de dépliage des deux rampes (5) sont réalisées par l'intermédiaire d'un ensemble de vérins portant au dessin la référence générale (8).

A proximité des deux extrémités de la coque sont disposés deux groupes propulseurs (9) dont chacun comprend une zone d'aspiration verticale de l'eau amenant celle-ci à un hélicoïde assurant la compression du fluide, puis projetant le jet propulsif sur la coque avec un angle de 15° environ.

Compte tenu de ce système de propulsion, les panneaux frontaux de la coque sont pratiquement verticaux sur toute leur hauteur, permettant le ménagement dans ceux-ci de portes (10) d'accès aux cabines. La vision latérale depuis les cabines formant poste de pilotage est assurée par l'intermédiaire de hublots fixes (12) ménagés dans les parois latérales, à proximité des extrémités de celles-ci.

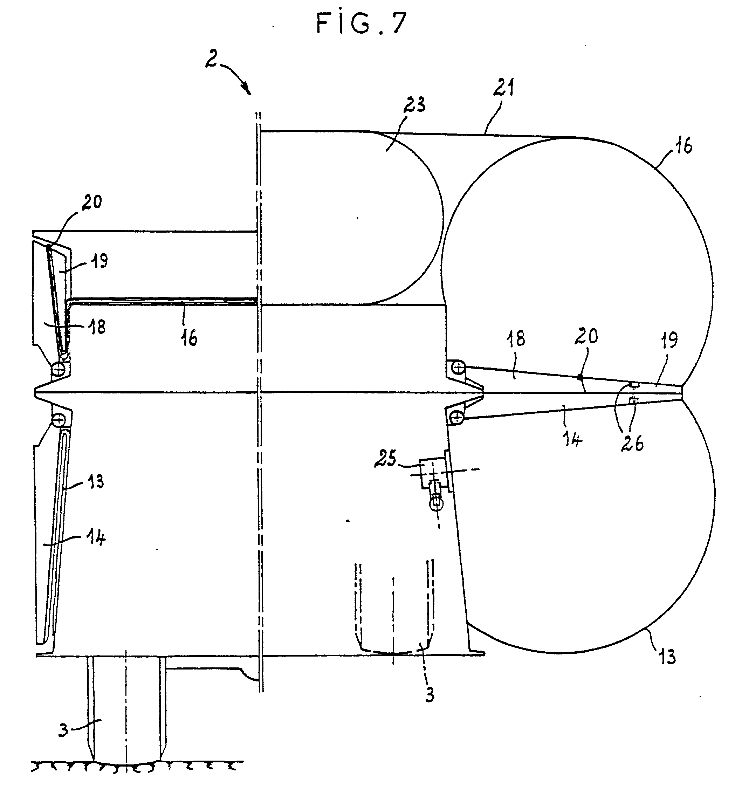

La coque (2) du véhicule est équipée le long de ses deux parois longitudinales de deux flotteurs longitudinaux gonflables (13). Chaque flotteur (13) est associé à un volet (14) qui, de longueur légèrement inférieure à celle de la coque de façon à dégager les hublots (12) en position de circulation sur route, est disposé verticalement le long d'une paroi longitudinale de la coque et recouvre le flotteur (13) correspondant, comme montré notamment dans la partie gauche de la figure 7, et qui, en position de navigation, occupe une position horizontale dans le prolongement de la paroi supérieure de la coque et empêche une déformation verticale vers le haut du flotteur correspondant, sous l'effet de la pression hydrostatique. Les volets (14) sont actionnés à l'aide de vérins hydrauliques (15), tandis que les flotteurs (13) se replient en position de fermeture sous l'action de sangles élastiques de rappel.

Chaque tronçon (6) d'une rampe (5) est équipé, pour sa part, de deux flotteurs latéraux et longitudinaux (16), dont chacun possède une longueur correspondant sensiblement à celle du tronçon de rampe considéré, de façon à venir en appui contre le flotteur de coque (13) situé du même côté.

Afin de permettre un même dimensionnement en section des flotteurs (13 et 16), chacun de ces derniers est associé à un volet (17) réalisé en deux parties, respectivement (18) et (19), articulées autour d'un axe longitudinal (20). La partie (18) est actionnée par des vérins hydrauliques (22), tandis que la partie (19) se replie automatiquement sous l'effet du rappel élastique des flotteurs (16) en position dégonflée.

Cet agencement permet de disposer de flotteurs latéraux de rampes, de grande section, sans que les volets (17) d'appui de ceux-ci forment un élargissement gênant du véhicule en période de circulation terrestre de celui-ci.

Chaque tronçon (6) de rampe (5) est également équipé d'un flotteur central (23) qui, disposé entre les deux flotteurs latéraux (16), vient, en position gonflée, prendre appui contre la paroi frontale (4) de la coque. A ce flotteur central (23) est associé un volet (24) qui, articulé sur la rampe (6), et repliable le long de celle-ci en position dégonflée du flotteur, sert d'appui vertical à la partie supérieure de celui-ci, dans la zone située entre le tronçon de rampe (6) considéré et la paroi frontale de la coque (2).

Le flotteur central (23) et les deux flotteurs latéraux (16) sont logés dans une même enveloppe (21), fournissant ainsi un ensemble monobloc assurant une bonne continuité des lignes d'eau.

Comme montré au dessin, l'alimentation des différents compartiments de chaque flotteur en air est réalisée à partir d'un groupe compresseur-décompresseur, par l'intermédiaire d'une soupape (25) à double effet, chaque compartiment comportant également une soupape de décharge (26) tarée à une valeur de l'ordre de $0,2 \times 10^5$ Pa. Il est ainsi possible d'assurer une pression constante à l'intérieur des flotteurs, malgré les différents mouvements du véhicule susceptibles d'intervenir en période de navigation, et malgré d'éventuelles fuites pouvant être dues à des déchirures.

Du fait de la structure des tronçons (6) de rampes (5), les ancres (27) du véhicule sont logées dans les tronçons de rampes d'extrémité (7) fermés par des volets amovibles (28).

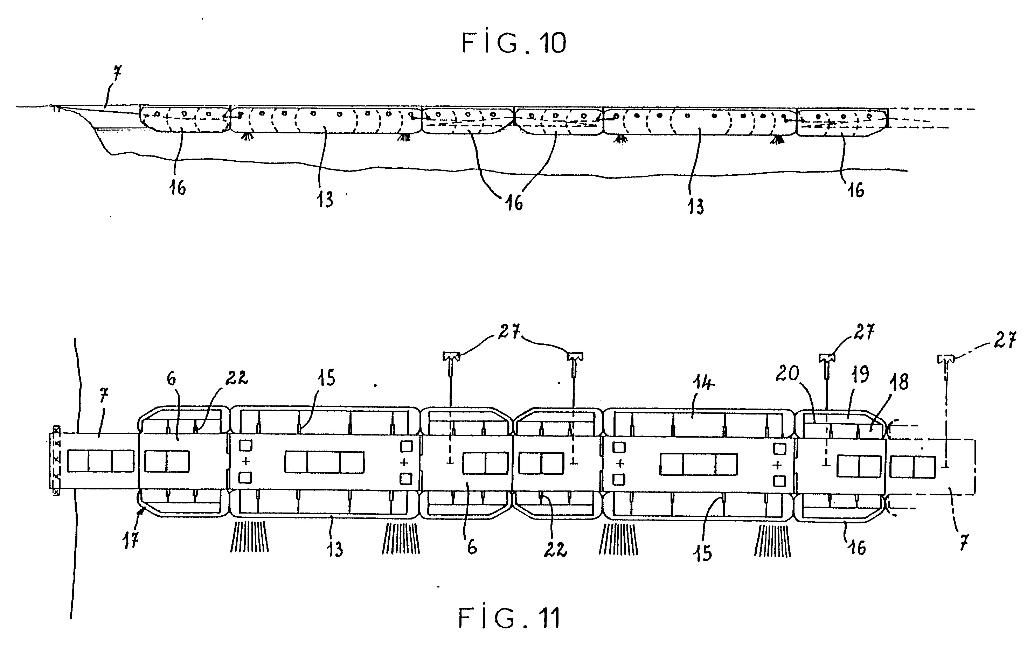

Dans le cas où un ancrage est nécessaire, par exemple lors de la formation d'un pont disposé transversalement au sens du courant, comme montré aux figures 10 et 11, les ancres (27) sont libérées instantanément après démontage des volets (28). Si besoin est, le maintien en place du pont peut être parfait par fonctionnement des propulseurs (9).

Comme il ressort de ce qui précède, l'invention apporte une grande amélioration à la technique existante en fournissant un véhicule amphibie qui, notamment en raison de son mode de propulsion aquatique, possède de très nombreux avantages par rapport aux véhicules existants. L'augmentation de la flottabilité de la coque proprement dite, l'augmentation du volume des flotteurs gonflables, et le fait que les différents flotteurs gonflables puissent être parfaitement jointifs, assurent une diminution du tirant d'eau ainsi qu'une amélioration du profil hydro-dynamique de la carène, augmentent les performances du véhicule.

Il faut également noter que la capacité de déplacement du véhicule dans l'eau est améliorée du fait de l'importance de la surface des flotteurs qui, réalisés en une matière synthétique, possèdent un meilleur coefficient de glissement que la coque qui est, pour sa part, réalisée en métal.

## Revendications

1. Véhicule amphibie du type comportant une coque (2) équipée de roues escamotables (3) et de flotteurs latéraux et longitudinaux gonflables (13), pour le franchissement de plans d'eau, sur les parois frontales (4) de laquelle sont articulées deux séries (5) de rampes elles-mêmes équipées de flotteurs latéraux et longitudinaux gonflables, qui, en position repliée reposent sur la paroi supérieure de la coque et en position dépliée prolongent celle-ci, caractérisé en ce que, d'une part chaque flotteur latéral (13) associé à la coque (2) possède, en position gonflée, une longueur correspondant à la longueur de la coque, tandis que des volets articulés (14), solidaires des flotteurs, et occupant une position horizontale prolongeant la paroi supérieure de la coque en position gonflée des flotteurs, possèdent chacun une longueur légèrement inférieure à celle de la coque, de façon à dégager les hublots d'extrémité (12) ménagés dans les parois latérales, en position repliée des volets, les extrémités de chaque flotteur (13) comportant un système élastique de rappel entre la coque (2) et le volet (14) correspondant, en position dégonflée et d'autre part, chaque tronçon (6) de rampe, articulé à une extrémité de la coque (2), et possédant une largeur correspondant à la largeur de celle-ci, est équipé de deux flotteurs (16) longitudinaux et latéraux gonflables, de longueur correspondant à celle du tronçon de rampe et de section correspondant à celle des flotteurs (13) de coque, de manière à venir chacun en appui contre le flotteur latéral de coque (13) situé du même côté, et escamotables en position dégonflée entre un volet (17) et ce tronçon de rampe, chaque volet (17) associé à un flotteur venant en position horizontale dans le prolongement de la paroi supérieure de la rampe, en position gonflée de ce flotteur.

2. Véhicule amphibie selon la revendication 1, caractérisé en ce que chaque flotteur latéral (16) associé à une rampe possède une largeur sensiblement égale à celle des flotteurs latéraux (13) associés à la coque (2), et chaque volet (17) associé à un flotteur latéral de rampe possède une largeur sensiblement égale à celle d'un volet (14) associé à un flotteur de coque, et est réalisé en deux parties (18, 19) articulées autour d'un axe longitudinal.

3. Véhicule amphibie selon la revendication 1 ou 2, caractérisé en ce que chaque tronçon (6) de rampe, articulé à une extrémité de la coque, est équipé d'un flotteur gonflable (23) qui, occupant une position centrale et s'étendant entre les flotteurs longitudinaux (16), vient prendre appui contre la paroi frontale de la coque, et est maintenu en position par un volet (24) disposé sous la rampe, et articulé sur celle-ci autour d'un axe parallèle à l'axe d'articulation de la rampe sur la coque.

4. Véhicule amphibie selon la revendication 3, caractérisé en ce que le flotteur central de rampe (23) est logé dans la même enveloppe que les flotteurs latéraux de rampe (16), afin de fournir un ensemble monobloc de flotteurs.

5. Véhicule amphibie selon l'une quelconque des revendications précédentes, caractérisé en ce que les différents flotteurs (13, 16, 24) sont équipés de soupapes de sécurité (26) tarées à une valeur déterminée et sont alimentés en air sous pression par des groupes compresseurs décompresseurs à débit continu.

6. Véhicule amphibie selon la revendication 5, caractérisé en ce que les groupes compresseurs sont agencés pour fonctionner comme décompresseurs par inversion de leur sens de rotation, et sont reliés au différents compartiments des flotteurs gonflables par l'intermédiaire de soupapes (25) à double effet associées à des moyens commandant leur ouverture dès que le groupe fonctionne en décompression.

7. Véhicule amphibie selon l'une quelconque des revendications précédentes, caractérisé en ce que chaque flotteur est compartimenté par des cloisons coniques dont les extrémités sont en appui les unes contre les autres.

8. Véhicule amphibie selon l'une quelconque des revendications précédentes, caractérisé en ce que les moyens assurant le déplacement du véhicule sur l'eau sont constitués par des propulseurs (9) à jets d'eau sous pression disposés à proximité des deux parois frontales de la coque.

9. Véhicule amphibie selon la revendication 8, caractérisé en ce que chaque propulseur (9) comporte un point d'aspiration verticalement de l'eau amenant celle-ci à un hélicoïde horizontal assurant la compression du fluide puis projetant le jet propulsif tangentiellement à l'hélicoïde sous un angle de l'ordre de 15° sous la coque.

**Claims**

1. Amphibious vehicle of the type comprising a hull (2) equipped with retractable wheels (3) and inflatable lateral longitudinal floats (13) for crossing water, on the end walls (4) of which hull are pivoted two series (5) of ramps, which are in turn equipped with inflatable lateral longitudinal floats and which when in the folded position rest on the top wall of the hull and, when in the unfolded position, form an extension of the latter, characterized in that on the one hand each lateral float (13) associated with the hull (2) has in the inflated position a length corresponding to the length of the hull, while pivoted flaps (14) fastened to the floats, and occupying a horizontal position extending the top wall of the hull when the floats are in the inflated position, each have a length slightly shorter than that of the hull, in such a manner as to leave clear the end portholes (12) provided in the side walls when the flaps are in the folded position, the ends of each float (13) being provided with a resilient system for return between the hull (2) and the corresponding flap (14) in the deflated position, and that on the other hand each ramp portion (6) pivoted to one end of the hull (2), and of a width corresponding to the width of the latter, is equipped with two inflatable lateral longitudinal floats (16) of a length correspond to that of the ramp portion and having a section corresponding to that of the hull floats (13), in such a manner that each of them comes to bear against the lateral hull float (13) situated on the same side, said floats (16) being adapted to retract, in the deflated position, between a flap (17) and said ramp portion, each flap (17) associated with a float assuming a horizontal position in line with the top wall of the ramp when said float is in the inflated position.

2. Amphibious vehicle according to Claim 1, characterized in that each lateral float (16) associated with a ramp has a width substantially equal to that of the lateral floats (13) associated with the hull (2), and that each flap (17) associated with a lateral ramp float has a width substantially equal to that of a flap (14) associated with a hull float and is composed of two parts (18, 19) pivoted about a longitudinal axis.

3. Amphibious vehicle according to Claim 1 or 2, characterized in that each ramp portion (6) pivoted on one end of the hull is equipped with an inflatable float (23) which occupies a central position extending between the longitudinal floats (16) and which comes to bear against the end wall of the hull and is held in position by a flap (24) disposed under the ramp and pivoted on the latter about an axis parallel to the pivot axis of the ramp on the hull.

4. Amphibious vehicle according to Claim 3, characterized in that the central ramp float (23) is housed in the same casing as the lateral ramp floats (16) in order to form a monobloc float assembly.

5. Amphibious vehicle according to any one of the preceding claims, characterized in that the different floats (13, 16, 24) are equipped with safety valves (26) set at a determined value and are fed with air under pressure by continuous-flow compressor-decompressor units.

6. Amphibious vehicle according to Claim 5, characterized in that the compressor units are arranged to act as decompressors by reversal of their direction of rotation and are connected to the different compartments of the inflatable floats by way of double-acting valves associated with means controlling their opening as soon as the unit operates in decompression.

7. Amphibious vehicle according to any one of the preceding claims, characterized in that each float is divided into compartments by conical partitions whose ends bear against one another.

8. Amphibious vehicle according to any one of the preceding claims, characterized in that the means effecting the movement of the vehicle on the water consist of pressurized water jet propulsion units (9) disposed near the two end walls of the hull.

9. Amphibious vehicle according to Claim 8, characterized in that each propulsion unit (9) has a vertical water intake point feeding the water to a horizontal helicoid, which compresses the fluid and expels the propulsion jet tangentially to the helicoid at an angle of the order of 15° under the hull.

## Patentansprüche

1. Amphibienfahrzeug mit einem schwimmfähigen Rumpf (2), der mit einziehbaren Rädern (3) und mit seitlichen, in Längsrichtung angeordneten, aufblasbaren Schwimmkörpern (13) ausgestattet ist, für das Befahren von Wasserflächen, an dessen Stirnwänden (4) zwei Gruppen von Rampen (5) angelenkt sind, die ihrerseits mit seitlichen, in Längsrichtung angeordneten Schwimmkörpern ausgestattet sind, welche in zusammengeklapptem Zustand auf dem Fahrzeugdeck des schwimmfähigen Rumpfes ruhen und diesen in aufgeklapptem Zustand verlängern, dadurch gekennzeichnet, daß einerseits jeder an dem schwimmfähigen Rumpf (2) angeordnete seitliche Schwimmkörper (13) in Luftgefülltem Zustand eine Länge hat, die der Länge des schwimmfähigen Rumpfes entspricht, während angelenkte Flügel (14), die mit den Schwimmkörpern fest verbunden sind und bei Luftgefüllten Schwimmkörpern eine Horizontallage einnehmen, wodurch das Fahrzeugdeck des schwimmfähigen Rumpfes vergrößert wird, jeweils eine Länge haben, die etwas geringer ist als die Länge des schwimmfähigen Rumpfes, so daß die an dessen Enden in den Seitenwänden angeordneten Bullaugen (12) bei zusammengeklappten Flügeln freigehalten werden, wobei die Enden jedes Schwimmkörpers (13) ein zwischen dem schwimmfähigen Rumpf (2) und dem entsprechenden Flügel (14) angeordnetes elastisches Rückholsystem in entlüftetem Zustand aufweisen, und daß andererseits jeder Rampenabschnitt (6), der an ein Ende des Schwimmfähigen Rumpfes (2) angelenkt ist und eine der Breite des schwimmfähigen Rumpfes entsprechende Breite hat, ausgestattet ist mit zwei seitlichen, in Längsrichtung angeordneten, aufblasbaren Schwimmkörpern (16), deren Länge der Länge des Rampenabschnitts und deren Querschnitt dem Querschnitt der Schwimmkörper (13) am schwimmfähigen Rumpf entspricht, wobei sich jeder an dem auf der gleichen Seite gelegenen Schwimmkörper (13) des schwimmfähigen Rumpfes abstützt, und die in entlüftetem Zustand jeweils zwischen einen Flügel (17) und diesen Rampenabschnitt einziehbar sind, wobei jeder einem Schwimmkörper zugeordnete Flügel (17) bei Luftgefülltem Schwimmkörper in eine Horizontallage in der Verlängerung der Oberfläche der Rampe gelangt.

2. Amphibienfahrzeug nach Anspruch 1, dadurch gekennzeichnet, daß die Breite jedes einer Rampe zugeordneten Schwimmkörpers (16) praktisch gleich der Breite der dem schwimmfähigen Rumpf (2) zugeordneten seitlichen Schwimmkörper (13) ist, und daß die Breite jedes einem seitlichen Rampenschwimmkörper zugeordneten Flügels (17) praktisch gleich der Breite eines einem Rumpf-Schwimmkörper zugeordneten Flügels (14) ist, wobei jeder Flügel (17) aus zwei Teilen (18, 19) besteht, die um eine Längsachse beweglich sind.

3. Amphibienfahrzeug nach Anspruch 1 oder 2, dadurch gekennzeichnet, daß jeder an ein Ende des schwimmfähigen Rumpfes angelenkte Rampenabschnitt (6) mit einem aufblasbaren Schwimmkörper (23) ausgestattet ist, der sich in einer Mittenposition zwischen den Längsschwimmkörpern (16) befindet, an der Stirnwand des schwimmfähigen Rumpfes anliegt und in seiner Lage durch einen unter der Rampe befindlichen Flügel (24) gehalten wird, der an der Rampe um eine Achse beweglich angebracht ist, die parallel zu der die Rampe mit dem schwimmfähigen Rumpf verbindenden Schwenkachse liegt.

4. Amphibienfahrzeug nach Anspruch 3, dadurch gekennzeichnet, daß der in der Mittellage befindliche Rampenschwimmkörper (23) in der gleichen Umhüllung angeordnet ist wie die seitlichen Rampenschwimmkörper (16), um so eine einheitliche Anordnung von Schwimmkörpern zu bilden.

5. Amphibienfahrzeug nach einem der vorhergehenden Ansprüche, dadurch gekennzeichnet, daß die verschiedenen Schwimmkörper (13, 16, 24) mit Sicherheitsventilen (26) ausgestattet sind, die auf einen vorbestimmten Wert eingestellt sind und mit aus Gruppen von Kompressions-/Dekompressionseinrichtungen mit kontinuierlicher Leistung gelieferter Druckluft versorgt werden.

6. Amphibienfahrzeug nach Anspruch 5, dadurch gekennzeichnet, daß die Kompressionsgruppen durch Umkehr ihrer Drehrichtung als Dekompressionseinrichtungen arbeiten und daß sie mit den verschiedenen Abteilen der aufblasbaren Schwimmkörper über gesteuerte Ventile (25) verbunden sind, die von zugeordneten Vorrichtungen offensteuerbar sind, sobald die Gruppe als Dekompressionseinrichtung arbeitet.

7. Amphibienfahrzeug nach einem der vorhergehenden Ansprüche, dadurch gekennzeichnet, daß jeder Schwimmkörper durch konische Trennwände unterteilt ist, deren Enden sich gegenseitig abstützen.

8. Amphibienfahrzeug nach einem der vorhergehenden Ansprüche, dadurch gekennzeichnet, daß die Einrichtungen zum Bewegen des Fahrzeugs auf dem Wasser als Druckwasserstrahlantriebe (9) ausgebildet sind, die in der Nähe der beiden Stirnwände des Schwimmfähigen Rumpfes angeordnet sind.

9. Amphibienfahrzeug nach Anspruch 8, dadurch gekennzeichnet, daß jeder Antrieb (9) eine vertikal gerichtete Ansaugstelle für Wasser besitzt, das Wasser in eine waagerecht liegende Schraube führt, wobei das Fluid komprimiert wird, und dann den Antriebsstrahl tangential zu der Schraube unter einem Winkel von etwa 15 Grad unter den schwimmfähigen Rumpf ausstößt.

FIG.1

FIG.2

FIG.9

FIG.8

FIG.3

FIG.4

0 143 009

FIG.5

7

6

2

23

24

FIG.6

18

7

20

19

6

2

# FİG.7

FÍG. 10

FÍG. 11